# EUROPÄISCHE PATENTANMELDUNG

(11) **EP 2 952 780 A2**
(43) Veröffentlichungstag der Anmeldung: **09.12.2015**
(21) Anmeldenummer: 15168793.6
(22) Anmeldetag: 22.05.2015
(51) Int. Cl.: F16H 1/22

(54) **GETRIEBE**

(30) Priorität: 28.05.2014 DE 102014210253
(71) Anmelder: Aktiebolaget SKF, 415 50 Göteborg (SE)
(72) Erfinder: Soltermann, Marcel, 4421 St. Pantaleon (CH); Doppler, Manuel, 79664 Wehr (DE); Pfeffer, Klaus, 79650 Schopfheim (DE); Tschabold, Tobias, 4133 Pratteln (CH)
(74) Vertreter: Kuhstrebe, Jochen

(57) **Zusammenfassung**

Ausführungsbeispiele betreffen ein Getriebe (27) für eine in einer Höhe (H) verstellbare Ablage, beispielsweise einen Patiententisch. Das Getriebe (27) umfasst wenigstens eine Antriebswelle (25) und wenigstens eine Abtriebswelle (26). Ferne umfasst das Getriebe (27) auch wenigstens ein Zahnrad (28), das ausgebildet ist, um eine Rotationsbewegung der Antriebswelle (25) auf die Abtriebswelle (26) zu übertragen, wobei das Zahnrad (28) als Material einen Kunststoff umfasst.

## Beschreibung

Ausführungsbeispiele beziehen sich auf ein Getriebe für eine in einer Höhe verstellbare Ablage, beispielsweise einen Patiententisch, sowie ein Verfahren zum Verändern einer Höhe einer Ablage, beispielsweise einem Patiententisch.

Höhenverstellbare Ablagen werden in ganz unterschiedlichen Anwendungen eingesetzt. Beispielsweise kann die Ablage in einer ersten Höhe be- und/oder entladen werden. In einer anderen Höhe kann ein Gut oder eine Person, das oder die auf der Ablage liegt, behandelt, begutachtet und/oder untersucht werden. Solche Ablagen können in medizinischen Anwendungen eingesetzt werden, beispielsweise als Liegen, Tische, Patiententisch oder dergleichen. Durch die Höhenverstellbarkeit der Ablage kann ein Patient zum Beispiel in eine Höhe gebracht werden, in der der Patient behandelt, auf eine andere Ablage oder Liege umgelagert und/oder auch die Ablage wieder verlassen kann. Um die Ablage in der Höhe zu verstellen, können eine Vielzahl von Verstelleinrichtungen eingesetzt werden.

Zusätzlich zu dem Bedarf, eine Höhenverstellung präzise und genau zu ermöglichen, unterliegen solche in einer Höhe verstellbare Ablagen bzw. ein Verfahren zum Verstellen der Ablage einer ganzen Reihe weiterer Anforderungen, beispielsweise bezüglich einer geringen Vibration, einer geringen Geräuschentwicklung und einer hohen Zuverlässigkeit.

Diesem Bedarf tragen ein Getriebe nach dem Anspruch 1 sowie ein Verfahren nach dem Anspruch 10 Rechnung.

Ausführungsbeispiele betreffen ein Getriebe für eine in einer Höhe verstellbare Ablage, beispielsweise einen Patiententisch, mit wenigstens einer Antriebswelle und wenigstens einer Abtriebswelle. Ferner umfasst das Getriebe wenigstens ein Zahnrad, das ausgebildet ist, um eine Rotationsbewegung der Antriebswelle auf die Abtriebswelle zu übertragen. Das Zahnrad umfasst als Material einen Kunststoff.

Gemäß einem weiteren Aspekt betreffen Ausführungsbeispiele ein Verfahren zum Verändern einer Höhe einer Ablage, beispielsweise einem Patiententisch. Bei dem Verfahren wird eine Antriebswelle angetrieben und eine Rotationsbewegung von der Antriebswelle auf ein Zahnrad, das als Material einen Kunststoff aufweist, übertragen. Die Rotationsbewegung wird von dem Zahnrad auf eine Abtriebswelle übertragen.

Dadurch, dass das Zahnrad einen Kunststoff umfasst, kann bei manchen Ausführungsbeispielen eine Vibration, bei einer Durchführung des Verfahrens oder einem Betrieb des Getriebes zumindest reduziert oder sogar völlig vermieden werden. Dadurch kann gegebenenfalls auch eine Geräuschentwicklung zumindest reduziert werden.

Eine Antriebswelle kann dabei zum Beispiel eine Welle sein, die von einem Antrieb, beispielsweise einem Antriebsmotor und/oder einem Handantrieb angetrieben wird. Eine Abtriebswelle kann dabei zum Beispiel eine Welle sein, die um eine Achse rotiert, die parallel zu der Richtung angeordnet ist, in der die Höhe verändert wird.

Das Zahnrad kann durch Fräsen hergestellt sein. Bei manchen Ausführungsbeispielen kann so eine Oberfläche des Zahnrads eine Struktur erhalten, die besonders geräusch- und/oder vibrationsarm in einem Betrieb ist. Ferner kann bei manchen Ausführungsbeispielen dadurch auch eine einfache Herstellung des Zahnrades ermöglicht werden.

Ergänzend oder alternativ umfasst die Antriebswelle bei manchen Ausführungsbeispielen als Material einen Stahl. Beispielsweise kann durch die Kombination von Stahl und Kunststoff eine besonders vibrationsdämpfende und/oder geräuscharme Materialpaarung bereitgestellt werden.

Ergänzend oder alternativ ist das Zahnrad bei manchen Ausführungsbeispielen ein Schneckenrad. Ferner kann die Antriebswelle, zumindest in dem Bereich in dem es mit dem Schneckenrad in Eingriff steht, ebenfalls eine Schneckenverzahnung aufweisen. Bei manchen Ausführungsbeispielen kann so eine besonders vibrations- und geräuscharme Verzahnung für eine Drehmomentübertragung bereitgestellt werden.

Bei manchen Ausführungsbeispielen ist das Zahnrad austauschbar. Dadurch kann unter Umständen das Zahnrad, weil es mit Kunststoff gegebenenfalls ein weniger verschleißresistentes Material umfasst, bei einem Verschleiß auf einfache Art und Weise gewechselt werden. Andere Komponenten des Getriebes können gegebenenfalls weiter im Einsatz bleiben.

Bei einigen weiteren Ausführungsbeispielen, umfasst das Getriebe wenigstens ein zweites Zahnrad, das ausgebildet ist, um eine zweite Abtriebswelle anzutreiben. Die zweite Abtriebswelle ist beispielsweise ausgebildet, um einen Hub der Höhenverstelleinrichtung pro Umdrehung zu vergrößern. Bei manchen Ausführungsbeispielen kann so eine Höhenverstelleinrichtung mit mehr oder einem größeren Hub bei gleichem Einbaumaß hergestellt werden. Ergänzend oder alternativ ist die Abtriebswelle bei manchen Ausführungsbeispielen eine Hohlwelle, an deren Mantel das Zahnrad befestigt ist. Bei manchen Ausführungsbeispielen kann das Zahnrad so auf einfache Art und Weise ausgetauscht werden. Beispielsweise kann das Zahnrad konzentrisch zu der Hohlwelle angeordnet sein. Beispielsweise können die beiden Abtriebswellen parallel zueinander und/oder in einem rechten Winkel zu der Antriebswelle angeordnet sein.

Ergänzend oder alternativ umfasst das Getriebe bei manchen Ausführungsbeispielen eine Gewindestange mit einem Außengewinde, die zumindest teilweise in der Hohlwelle aufgenommen ist. Ferner umfasst diese auch ein Adapterstück mit einem Innengewinde, das ausgebildet ist, um mit dem Außengewinde der Gewindestange in Eingriff zu stehen und/oder Laufbahnen für Kugeln auszubilden. Das Adapterstück weist eine Adapterbefestigungsstruktur auf, die ausgebildet ist, um das Adapterstück mit einer korrespondierenden Hohlwellenbefestigungsstruktur der Hohlwelle drehfest zu verbinden. Bei manchen Ausführungsbeispielen kann so entfallen, dass die Gewindegänge für die Kugeln im Inneren der Hohlwelle angebracht oder eingeformt werden müssen. Dadurch kann eine Herstellung der Hohlwelle bei manchen Ausführungsbeispielen vereinfacht werden. Auch kann ein Austausch bei einem Verschleiß oder einer Abnutzung eventuell vereinfacht sein. Die Gewinde können dabei beispielsweise über Kugeln oder Rollen miteinander in Eingriff stehen. Optional kann das Innengewinde und/oder ein Teil der Laufbahn für die Kugeln oder Rollen auch direkt in die Hohlwelle eingebracht werden. So kann bei manchen Ausführungsbeispielen das Adapterstück entfallen.

Ausführungsbeispiele gemäß einem weiteren Aspekt betreffen auch eine Ablage, die in einer Höhe verstellbar ist, beispielsweise einen Patiententisch mit einem Getriebe nach wenigstens einem der vorhergehenden Ausführungsbeispiele. Die Ablage umfasst auch eine Ablageplatte, deren Position gegenüber einer Fläche, auf der die Ablage steht, veränderbar ist. Bei manchen Ausführungsbeispielen kann so die Ablage oder deren Ablageplatte besonders geräusch- und/oder vibrationsarm in einer Höhe verstellt werden.

Die in der vorstehenden Beschreibung, den nachfolgenden Ansprüchen und den beigefügten Figuren offenbarten Ausführungsbeispiele sowie deren einzelne Merkmale können sowohl einzeln wie auch in beliebiger Kombination für die Verwirklichung eines Ausführungsbeispiels in ihren verschiedenen Ausgestaltungen von Bedeutung sein und implementiert werden.
- Fig. 1a: zeigt eine schematische Darstellung einer Vorderansicht eines Getriebes für eine Höhenverstelleinrichtung gemäß einem Ausführungsbeispiel;
- Fig. 1b und 1c: zeigen Seitenansichten des Getriebes der Fig. 1a;
- Fig. 1d: zeigt eine weitere Seitenansicht des Getriebes gemäß der Fig. 1a;
- Fig. 1e: zeigt eine schematische Querschnittsdarstellung entlang der Schnittlinie B-B des Getriebes der Fig. 1a;
- Fig. 1f: zeigt eine schematische Querschnittsdarstellung durch die Schnittlinie C-C des Getriebes der Fig. 1a;
- Fig. 1g: zeigt eine schematische Querschnittsdarstellung durch die Schnittlinie A-A des Getriebes der Fig. 1a;
- Fig. 1h: zeigt eine schematische Querschnittsdarstellung durch das Getriebe der Fig. 1a entlang der Schnittlinie D-D;
- Fig. 1i: zeigt einen vergrößerten Ausschnitt der Fig. 1g;
- Fig. 1j: zeigt eine perspektivische Darstellung des Getriebes der Fig. 1a bis 1i;
- Fig. 2: zeigt eine schematische Darstellung einer perspektivischen Ansicht einer in einer Höhe verstellbaren Ablage mit einem Getriebe gemäß einem Ausführungsbeispiel;
- Fig. 3a: zeigt eine Vorderansicht der Ablage mit dem Getriebe nach dem Ausführungsbeispiel der Fig. 2;
- Fig. 3b: zeigt eine Aufsicht der Ablage nach dem Ausführungsbeispiel der Fig. 2 und 3a;
- Fig. 4a: zeigt eine schematische Querschnittsdarstellung einer Gewindestange mit einem Adapterstück für ein Getriebe gemäß einem weiteren Ausführungsbeispiel;
- Fig. 4b: zeigt eine schematische Darstellung eines vergrößerten Ausschnitts der Fig. 4a;
- Fig. 4c: zeigt eine schematische perspektivische Darstellung der Gewindestange der Fig. 4a;
- Fig. 4d: zeigt ein Getriebe mit der Gewindestange dem Ausführungsbeispiel der Fig. 4a bis 4c;
- Fig. 4e: zeigt eine schematische Querschnittsdarstellung durch das Getriebe der Fig. 4d entlang der Schnittlinie B-B;
- Fig. 4f: zeigt eine schematische Querschnittsdarstellung durch das Getriebe der Fig. 4e entlang der Schnittlinie A-A;
- Fig. 5: zeigt eine schematische Darstellung eines Verfahrens zum Verändern einer Höhe einer Ablage gemäß einem Ausführungsbeispiel.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

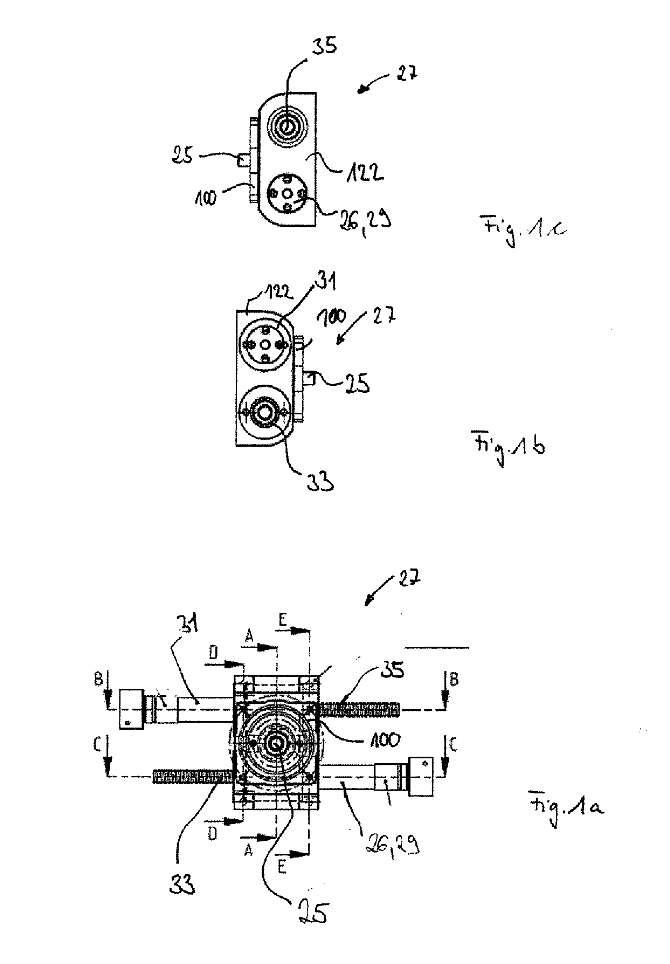

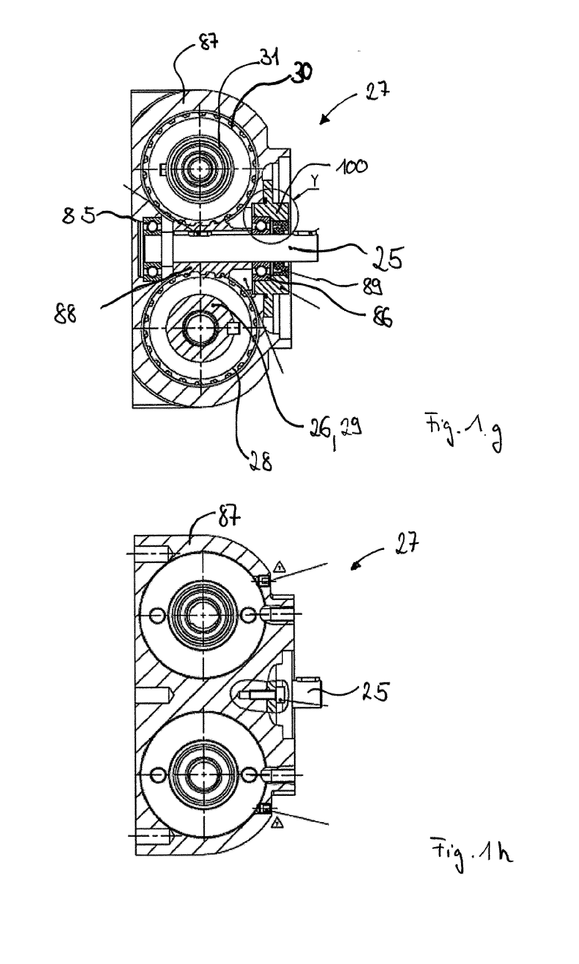

Die Fig. 1a bis 1j zeigen unterschiedliche Ansichten und Darstellungen eines Getriebes 27 für eine in einer Höhe verstellbare Ablage. Wie beispielsweise in Fig. 1g erkennbar, umfasst das Getriebe 27 eine Antriebswelle 25, wenigstens eine Abtriebswelle 26 und wenigstens ein Zahnrad 28, das ausgebildet ist, um eine Rotationsbewegung der Antriebswelle 25 auf die Abtriebswelle 26 zu übertragen, wobei das Zahnrad 28 als Material einen Kunststoff umfasst.

Bei dem Kunststoff kann es sich beispielsweise um einen thermoplastischen Kunststoff zum Beispiel Polyoxymethylen (Abk.: POM) handeln. Bei manchen Ausführungsbeispielen kann das Zahnrad 28 vollständig aus dem Kunststoff hergestellt sein. Bei anderen Ausführungsbeispielen kann beispielsweise nur ein Oberfläche oder auch nur Funktionsflächen des Zahnrads 28 den Kunststoff umfassen oder mit diesem beschichtet sein.

Konventionelle Verstelleinrichtungen oder Getriebe für in der Höhe verstellbare Ablagen, beispielsweise Patiententische, umfassen meist ein Getriebe, um eine Umlenkung der Kraft und/oder Kraftübersetzung zu erreichen. Die Getriebeteile werden meist aus metallischen Werkstoffen hergestellt. In einem Betrieb können, beispielsweise bei einem Verstellen der Ablage, Vibrationen und Geräusche auftreten. Dies ist unerwünscht, weil es beispielsweise den Komfort für einen Patienten, der auf der Ablage liegt und/oder einen Bediener oder Operateur, einschränken kann. Beispielsweise kann durch die Änderung des Materials des wenigstens einen Zahnrads ermöglicht werden, dass ein Material eingesetzt wird, das Vibrationen absorbiert. Als Ergebnis können eventuell Vibrationen und/oder Vibrationsgeräusche zumindest verringert werden, die in dem Getriebe ansonsten auftreten würden. Das wenigstens eine Zahnrad 28, das auch als Getrieberad bezeichnet werden kann, ist also aus Plastik oder Kunststoffmaterialien hergestellt, um Geräusche und Vibrationen zu reduzieren.

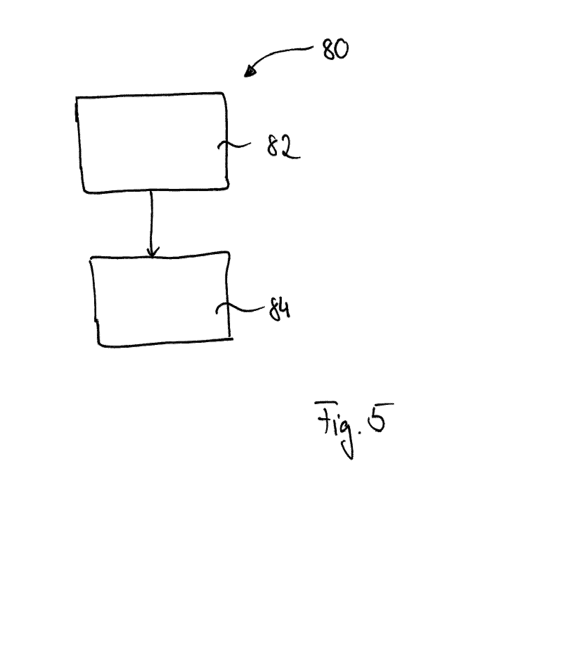

Mit dem Getriebe 27 kann beispielsweise ein in Fig. 5 dargestelltes Verfahren 80 zum Verändern einer Höhe einer Ablage durchgeführt werden. Bei dem Verfahren 80 wird in einem Vorgang 82 eine Rotationsbewegung von der Antriebswelle 25 auf das Zahnrad 28, das als ein Material einen Kunststoff aufweist, übertragen. Von diesem wird die Rotationsbewegung in einem Vorgang 84 auf die Abtriebswelle 26 übertragen. Bei einigen weiteren Ausführungsbeispielen kann das Verfahren 80 auch mit anderen Getrieben ausgeführt werden.

Bei dem Ausführungsbeispiel der Fig. 1a bis 1j handelt es sich bei der Abtriebswelle 26 um eine Hohlwelle 29 eines Kugelgewindetriebs. Bei einigen weiteren, nicht dargestellten Ausführungsbeispielen kann die Abtriebswelle auch zu einer Linearführungseinheit einer anderen Bauart gehören, wie beispielsweise einem Gleitgewindetrieb oder einem Wälzschraubtrieb.

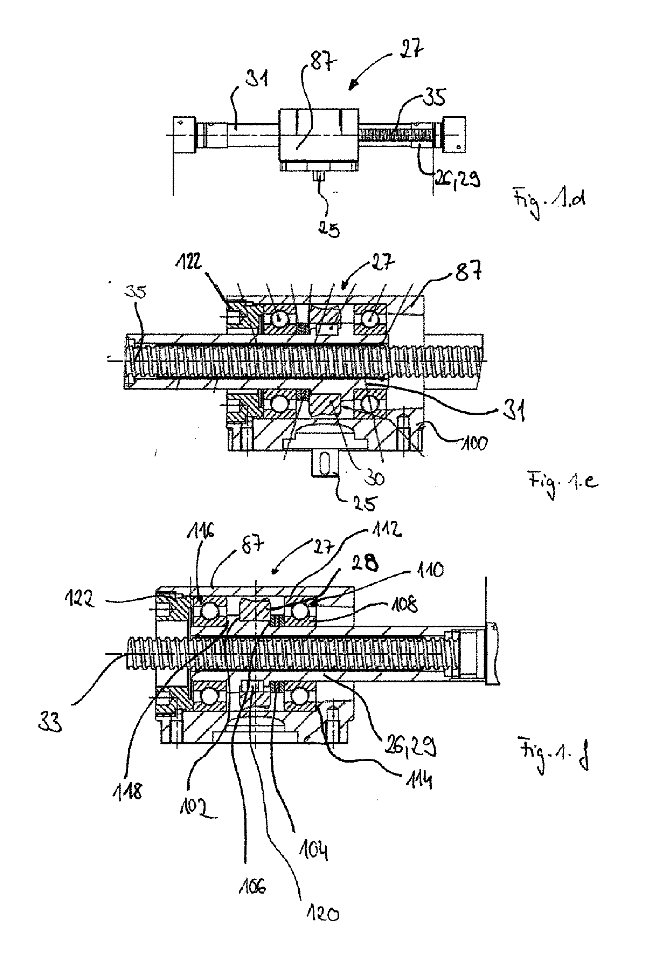

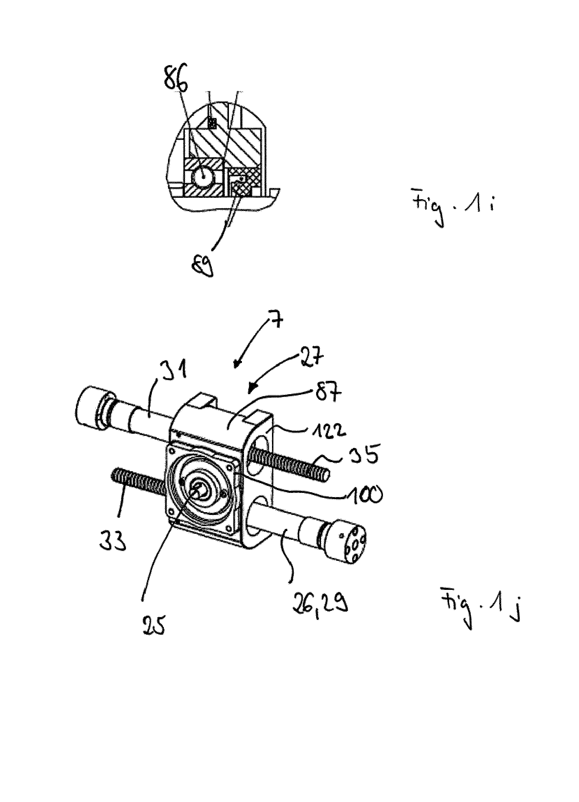

Das Getriebe 27 umfasst ein zweites Zahnrad 30, welches analog zu dem Zahnrad 28 ein Drehmoment von der Antriebswelle 25 auf eine weitere Abtriebswelle, die als Hohlwelle 31 ausgebildet ist und zu einem weiteren Kugelgewindetrieb gehört, überträgt. Die Antriebswelle 25 ist, wie in Fig. 1 erkennbar, über ein erstes Wälzlager 85, welches beispielsweise als Kugellager ausgebildet sein kann, und ein zweites Wälzlager 86 in einem Getriebegehäuse 87 drehbar gelagert. Bei einigen weiteren, nicht dargestellten Ausführungsbeispielen kann die Lagerung auch auf andere Art und Weise erfolgen. Die Wälzlager können als Wälzlager unterschiedlicher Bauart, Kugellager, Rollenlager, Kegelrollenlager oder dergleichen ausgebildet sein.

In einem Bereich, in dem die Antriebswelle 25 mit den Zahnrädern 28 und 30 in Eingriff steht, weist die Antriebswelle 25 eine Schneckenverzahnung 88 auf. Die Schneckenverzahnung 88 befindet sich an einem Ende der Antriebswelle 25. Die Schneckenverzahnung 88 der Antriebswelle 25 umfasst als Material einen Stahl. Auch die Zahnräder 28 und 30 weisen eine entsprechende Schneckenverzahnung auf. Bei einigen weiteren, nicht dargestellten Ausführungsbeispielen können die Antriebswelle und auch die Zahnräder andere Verzahnungen aufweisen, die ineinander eingreifen.

Das Getriebegehäuse 87 weist in Richtung der Antriebswelle 25 eine Öffnung auf, die mit einem Getriebedeckel 100 verschlossen ist. In dem Getriebedeckel 100 ist ein Dichtring 89 eingesetzt. Der Dichtring 89 weist, wie in der Vergrößerung der Fig. 1i erkennbar, eine Dichtkante auf, die an der Antriebswelle 25 bzw. einer Oberfläche der Antriebswelle 25 schleift. Bei einigen weiteren, nicht dargestellten Ausführungsbeispielen kann statt des Wälzlagers 68 auch ein Wälzlager mit einer Dichtung oder ein anderes Wälzlager mit einer Dichtung eingesetzt werden. Bei manchen Ausführungsbeispielen kann die Dichtung auch entfallen.

Das Zahnrad 28 stützt sich in axialer Richtung gegen einen Anschlag 102 an einer Außenmantelfläche der Hohlwelle 29 ab. Die Sicherung in axialer Richtung gegenüberliegend erfolgt über eine Mehrzahl von Distanzringen 104, die sich in axialer Richtung über einen Lager 110 bzw. dessen Innenring 108 an einem Absatz des Gehäuses 87abstützen. Die Distanzringe 104 weisen eine größere Ausdehnung nach radial außen auf als der Absatz 106 und können so das Zahnrad 28 in axialer Richtung fixieren. Die Distanzringe 104 werden in axialer Richtung über ein Wälzlager 110 und das Gehäuse 87 fixiert. Dazu stützen sich die Distanzringe 104 gegen einen Innenring 108 des Wälzlagers 110 ab, über den die Hohlwelle 29 drehbar gegenüber dem Gehäuse 87 gelagert ist. Ein Außenring 112 des Wälzlagers 110 stützt sich über einen Axialanschlag 114 des Gehäuses 87 ab. Die Hohlwelle 29 ist über ein zweites Wälzlager 116 ebenfalls gegenüber dem Gehäuse 87 gelagert. Ein Innenring des zweiten Wälzlagers 116 stützt sich gegen einen Axialanschlag 118 auf der Hohlwelle ab. Die beiden Lager 116 und 110 sind so angeordnet, dass sie das Zahnrad 28 in axialer Richtung zwischen sich aufnehmen. Bei dem Ausführungsbeispiel sind drei Distanzringe zwischen dem Zahnrad 28 und dem Wälzlager 110 angeordnet. Bei einigen weiteren, nicht dargestellten Ausführungsbeispielen kann auch eine andrer Anzahl von Distanzringen und oder eine andere Lagerung vorgesehen sein.

Das Zahnrad 28 ist über eine Federnutverbindung 120 drehfest an der der Hohlwelle 29 angeordnet. Die Hohlwelle 29 und/oder das Zahnrad 28 weisen eine Nut, zur Aufnahme einer Passfeder auf. Bei einigen weiteren, nicht dargestellten Ausführungsbeispielen kann die drehfeste Anordnung des Zahnrads gegenüber der Hohlwelle auf andere Art und Weise erfolgen.

Die Hohlwelle 31 ist im Wesentlichen analog gegenüber dem Getriebegehäuse 78 über Wälzlager gelagert. Das Zahnrad 30 ist analog an der Hohlwelle 31 befestigt, wie in der Fig. 1e erkennbar.

In axialer Richtung, der Hohlwellen 29 und 31, ist das Getriebegehäuse 87 jeweils über ein Seitenteil 122 verschlossen. Das Seitenteil 122 weist eine Öffnung auf, durch die eine Gewindestange 33, die in der Hohlwelle 29 geführt ist, herausragt. Bei der Hohlwelle 29 und der Gewindestange 33 handelt es sich um Bauteile eines Kugelgewindetriebs. Die Gewindestange 33 ist über eine Mehrzahl von Kugeln, die in Laufbahnen laufen, die sich zwischen einem Inngenwinde der Hohlwelle 29 und einem Außengewinde der Gewindestange 33 ergeben, beweglich gegenüber der Hohlwelle 29 geführt. Ferner umfasst die Hohlwelle 29 nicht dargestellte Gewindegänge, in denen die Kugeln wieder zurückgeführt werden können. Wenn die Hohlwelle 29 gedreht wird, wird die Gewindestange 33 je nach Drehrichtung entweder aus der Hohlwelle 33 herausbewegt oder weiter in dieser versenkt. Bei der Hohlwelle 31 handelt es sich ebenfalls um ein Bauteil eines Kugelgewindetriebs. Dieser umfasst eine Gewindestange 35, die ebenfalls beweglich in der Hohlwelle geführt ist.

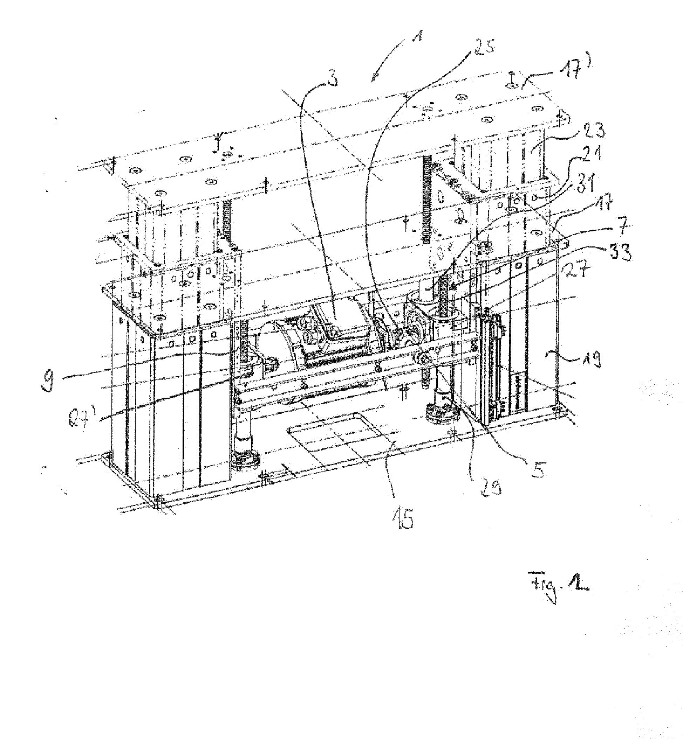

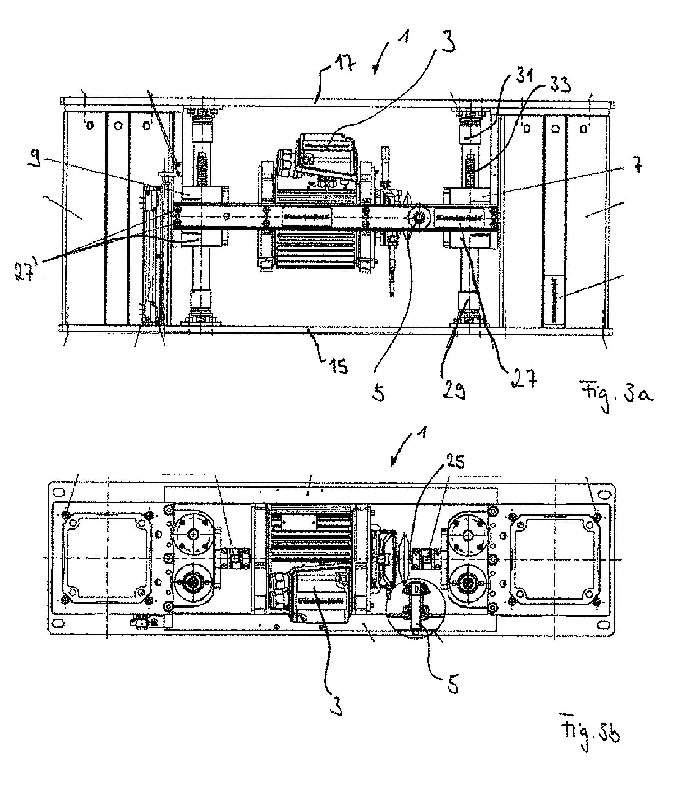

Die Fig. 2, 3a und 3b zeigen unterschiedliche Ansichten einer Verstelleinrichtung 1 für eine in einer Höhe verstellbare Ablage, beispielsweise einen Patiententisch mit dem Getriebe 27. Die Verstelleinrichtung 1 umfasst ferner einen Antriebsmotor 3, der ausgebildet ist, um eine Höhe H der Verstelleinrichtung 1 zu verändern. Ferner umfasst die Verstelleinrichtung 1 auch einen Handantrieb 5, der ausgebildet ist, um eine Höhe H der Verstelleinrichtung 1 zu verändern. Bei einer Höhe H der Verstelleinrichtung 1 kann es sich dabei um eine Ausdehnung der Verstelleinrichtung 1 handeln, senkrecht zu einem Boden oder einer Fläche, auf der die Verstelleinrichtung 1 steht.

Der Handantrieb 5 und auch der Antriebsmotor 3 können die Antriebswelle 25 antreiben, sodass sich die Antriebswelle 25 um eine Rotationsachse R dreht. Der Antriebsmotor kann beispielsweise ein Wechselstrommotor sein. Die Antriebswelle 25 ist senkrecht zu der Höhe H in die die Verstelleinrichtung 1 verstellt werden kann, angeordnet. Über die Antriebswelle 25 und das Getriebe 27, welches auch als Getriebebox bezeichnet werden kann, kann eine Höhenverstelleinrichtung 7 angetrieben bzw. in ihrer Höhe H verändert werden. Die Rotationsbewegung wird dabei um 90° umgelenkt. Die Drehzahl kann beibehalten werden. Optional kann dabei eine Über- oder Untersetzung erfolgen. Bei dem Ausführungsbeispiel der Figuren umfasst die Verstelleinrichtung 1 neben der ersten Höhenverstelleinrichtung 7 auch eine zweite Höhenverstelleinrichtung 9, welche über ein Getriebe 27', das im Wesentlichen analog zu dem Getriebe 27 ausgebildet ist, verstellt werden kann. Jede der Höhenverstelleinrichtungen 7 und 9 ist an einem gegenüberliegenden Ende der Antriebswelle 25 angeordnet. Die Antriebswelle 25 greift an den Getrieben 27 und 27' auf die beschriebene Art und Weise ein und verstellt die vier Kugelgewindetriebe. Bei einigen weiteren, nicht dargestellten Ausführungsbeispielen können die Höhenverstelleinrichtungen oder die Getriebe auch andere Linearantriebe oder Linearführungen umfassen.

Ferner umfasst die Verstelleinrichtung 1 auch eine erste Führungsstruktur 11 und eine zweite Führungsstruktur 13. Die beiden Führungsstrukturen 11 und 13 sind in Richtung der Rotationsachse R außerhalb der beiden Höhenverstelleinrichtungen 7 und 9 angeordnet. Sowohl die beiden Führungsstrukturen 11 und 13, wie auch die beiden Höhenverstelleinrichtungen 7 und 9 sind jeweils mit einer Bodenplatte 15 sowie einer Ablageplatte 17 verbunden. Die Hohlwelle 29 ist dabei an der Bodenplatte 15 und die Hohlwelle 31 an der Ablageplatte 17 befestigt. In Fig. 1 ist die Ablageplatte 17 in einem ausgefahrenen Zustand mit dem Bezugszeichen 17' gekennzeichnet und strichliniert dargestellt. Die Ablageplatte 17 dient beispielsweise zur Befestigung oder Aufnahme einer Liegefläche oder Aufnahmefläche für einen Patienten oder einen Gegenstand, der oder das auf der Ablage aufgenommen werden soll. Die Bodenplatte 15 ist auf einer Fläche, auf der die Verstelleinrichtung 1 steht, angeordnet. Die Ablageplatte 17 ist im Wesentlichen parallel zu der Bodenplatte 15 angeordnet. Im vorliegenden Ausführungsbeispiel weisen die Bodenplatte 15 und die Ablageplatte 17 ähnliche Abmessungen auf. Bei einigen weiteren, nicht dargestellten Ausführungsbeispielen können die Bodenplatte und die Ablageplatte auch unterschiedliche Dimensionen aufweisen.

Die Führungsstrukturen 11 und 13 dienen dazu, eine Verstellbewegung durch die Höhenverstelleinrichtungen 7 und 9 zu Führen und zu Stabilisieren und weisen selbst keinen Antrieb auf. Bei den Führungsstrukturen 11 und 13 handelt es sich jeweils um ähnlich aufgebaute, teleskopisch verfahrbare Säulen. Im Folgenden wird deshalb lediglich die Führungsstruktur 11 näher beschrieben. Die Führungsstruktur 11 umfasst drei Rohre 19, 21 und 23, die jeweils einen rechteckigen Querschnitt aufweisen. Bei einigen weiteren, nicht dargestellten Ausführungsbeispielen kann die Führungsstruktur auch eine andere Anzahl von Rohren, beispielsweise fünf aufweisen. Das Rohr 19 mit einem größten Querschnitt ist mit der Bodenplatte 15 verbunden. In dem Rohr 19 mit dem größten Querschnitt ist das Rohr 21 mit einem mittleren Querschnitt in Richtung der Höhe H beweglich angeordnet und geführt. In dem Rohr 21 ist ein weiteres Rohr 23 mit einem kleinsten Querschnitt ebenfalls in Richtung der Höhe H beweglich angeordnet und geführt. Das Rohr 23 mit dem kleinsten Querschnitt ist mit der Ablageplatte 17 verbunden. Durch die Querschnittsform können sich die Rohre 19 bis 23 nicht zueinander verdrehen. Die beiden Führungsstrukturen 11 und 13 können auch als zwei teleskopische Säulen, jeweils mit drei zylinderförmigen Auszügen bezeichnet werden, welche als Werkstoff Aluminium umfassen. Bei einigen weiteren, nicht dargestellten Ausführungsbeispielen kann die Verstelleinrichtung auch keine Führungsstrukturen, nur eine Führungsstruktur oder einer anderen Art von Führungsstruktur, beispielsweise eine andere Linearführungseinheit, umfassen.

Mit dem Getriebe 27 kann eine Verstelleinrichtung, beispielsweise für medizinische Tische oder Patiententische den Bedürfnissen nach einer geringen Geräuschentwicklung und einer geringen auftretenden Vibration bei einem Verstellen gerecht werden.

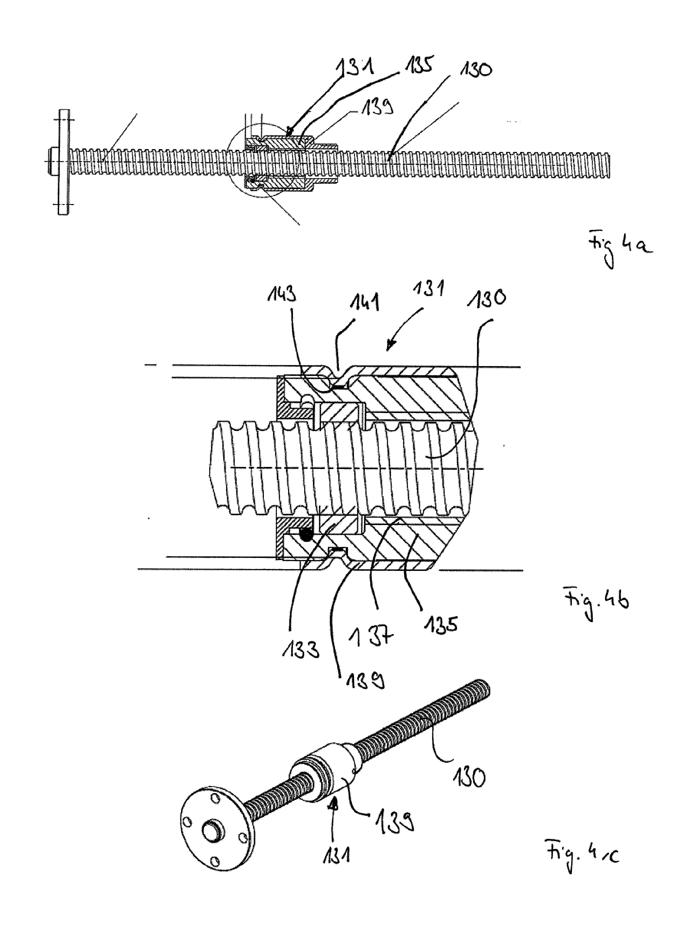

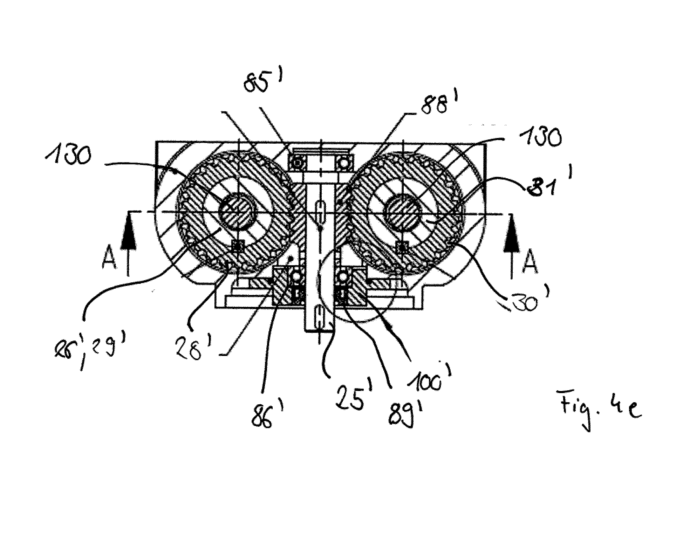

Die Fig. 4a bis 4c zeigen ein weiteres Ausführungsbeispiel einer Gewindestange 130 für das Getriebe. Die Gewindestange 130 umfasst ein Adapterstück 131. Das Adapterstück 131 umfasst, wie in der vergrößerten Darstellung der Fig. 4b erkennbar, eine Mutter 133, die mit einem Außengewinde der Gewindestange 130 in Eingriff steht. Ferner umfasst das Adapterstück 131 eine Hülse 135, die schematisiert dargestellte Gewindegänge 137 aufweist. Diese bilden zusammen mit den Gewindegängen der Gewindestange 130 Laufflächen für eine Mehrzahl von nicht dargestellten Kugeln.

An einer Außenkontur der Hülse 135 ist ein Mantel 139 angeordnet. Der Mantel 139 weist in axialer Richtung eine größere Ausdehnung als die Hülse 135 auf und umfasst auf einer axialen Höhe der Mutter 133 eine Eindrückung 141, die sich in eine Nut 143 der Hülse 135 schmiegt. Die Nut 143 befindet sich umlaufend an einer Außenfläche der Hülse 135 auf Höhe der Mutter 133. Die Eindrückung 141 kann beispielsweise ein Gewinde sein oder umfassen, das als Adapterbefestigungsstruktur dient. Mittels der Adapterbefestigungsstruktur kann das Adapterstück 131 in einer Hohlwelle befestigt wird. Dazu kann auch die Hohlwelle ein entsprechendes Gewinde als Hohlwellenbefestigungsstruktur aufweisen. Das Adapterstück 131 kann auch in die Hohlwelle eingewindet werden.

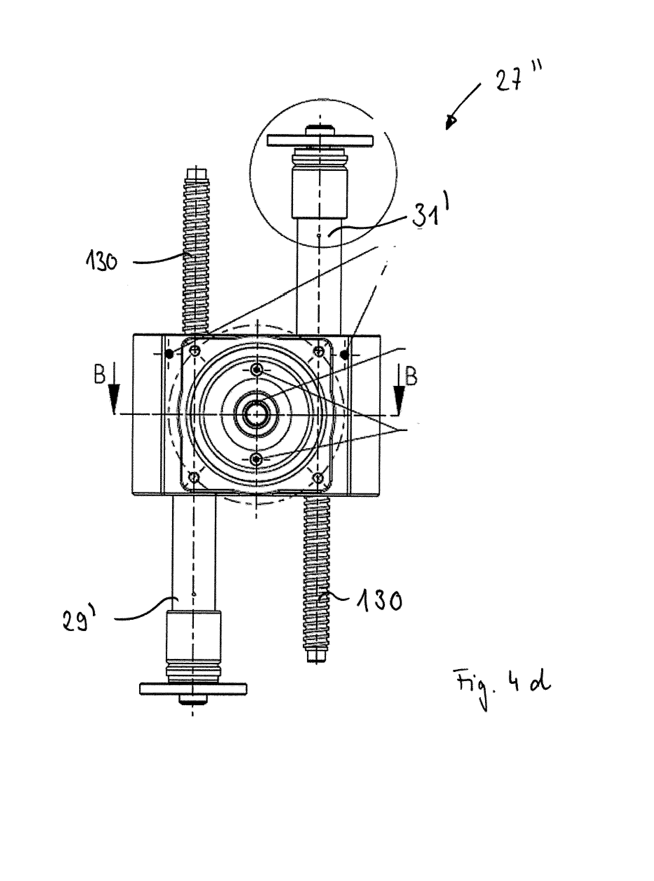

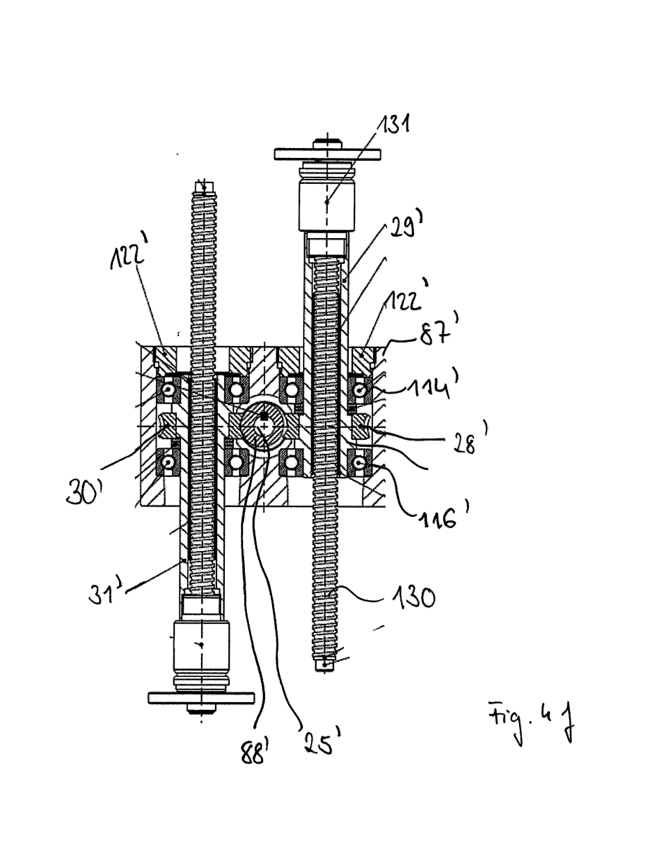

Die Fig. 4d und 4f zeigen unterschiedliche Darstellungen eines Getriebes 27" mit der Gewindestange 130 und dem Adapterstück 131. Das Getriebe 27" ist im Wesentlichen ähnlich zu dem Getriebe 27 aufgebaut. Gleiche oder ähnliche Bauteile werden deshalb mit gleichen Bezugszeichen unter hinzufügen eine "'" gekennzeichnet. Statt der Getriebe 27 und 27' können bei der Verstelleinrichtung 1 auch zwei Getriebe 27" eingesetzt werden.

Bei Ausführungsbeispielen des Getriebes oder des Getriebegehäuses kann ein geringeres Geräusch und eine geringere Vibration beim Verstellen einer Ablage für medizinische Anwendungen ermöglicht werden. Das Getriebe 27, eine Ablage mit dem Getriebe 27 oder das Verfahren 80 können, wie für die Figuren beschrieben in allen möglichen medizinischen Anwendungen, beispielsweise zum Verstellen von Liegen, Betten, Patiententischen oder dergleichen eingesetzt werden. Das Getriebe 27 kann beispielsweise bei einer Hubeinheit für einen medizinischen Tisch eingesetzt werden. Solche Anwendungen können zum Beispiel alle möglichen Anwendungen oder Untersuchungen, insbesondere Röntgenanwendungen oder Untersuchungen, CT, CRT, MRT und/oder MRI-Untersuchungen sein. Um einen Komfort für einen Patienten und/oder auch für einen Bediener zu erhöhen, ist es wichtig, dass bei solchen Anwendungen nur geringe Geräusche und möglichst geringe Vibrationen auftreten. Das Getriebe 27 und das Verfahren 80 können jedoch auch anders als für die Ausführungsbeispiele der Figuren beschrieben, in allen möglichen anderen Anwendungen und Einsatzgebieten, wie beispielsweise in der Fertigung, zu Montagezwecken oder dergleichen eingesetzt werden.

Die in der vorstehenden Beschreibung, den nachfolgenden Ansprüchen und den beigefügten Figuren offenbarten Ausführungsbeispiele sowie deren einzelne Merkmale können sowohl einzeln wie auch in beliebiger Kombination für die Verwirklichung eines Ausführungsbeispiels in ihren verschiedenen Ausgestaltungen von Bedeutung sein und implementiert werden.

Bei einigen weiteren Ausführungsbeispielen können Merkmale, die in anderen Ausführungsbeispielen als Vorrichtungsmerkmal offenbart sind, auch als Verfahrensmerkmale implementiert sein. Ferner können gegebenenfalls auch Merkmale, die in manchen Ausführungsbeispielen als Verfahrensmerkmale implementiert sind, in anderen Ausführungsbeispielen als Vorrichtungsmerkmale implementiert sein.

### Bezugszeichenliste

- 1: Verstelleinrichtung
- 3: Antriebsmotor
- 5: Handantrieb
- 7: erste Höhenverstelleinrichtung
- 9: zweite Höhenverstelleinrichtung
- 11: erste Führungsstruktur
- 13: zweite Führungsstruktur
- 15: Bodenplatte
- 17: Ablageplatte
- 19: Rohr größter Querschnitt
- 21: Rohr mittlerer Querschnitt
- 23: Rohr kleinster Querschnitt
- 25: Antriebswelle
- 27: Getriebe
- 29: Hohlwelle
- 31: Hohlwelle
- 33: Gewindestange
- 35: Gewindestange
- 80: Verfahren
- 82: Vorgang
- 84: Vorgang
- 85: Wälzlager
- 86: Wälzlager
- 87: Getriebegehäuse
- 88: Schneckenverzahnung
- 89: Dichtring
- 100: Getriebedeckel
- 102: Anschlag
- 104: Distanzring
- 106: Absatz
- 108: Innenring
- 110: Wälzlager
- 112: Außenring
- 114: Axialanschlag
- 116: Wälzlager
- 118: Axialanschlag
- 120: Federnutverbindung
- 122: Seitenteil
- 130: Gewindestange
- 131: Adapterstück
- 133: Mantel
- 135: Hülse
- 137: Gewindegänge
- 139: Mantel
- 141: Eindrückung
- 143: Nut

- R: Rotationsachse Antriebswelle

## Patentansprüche

1. Getriebe (27) für eine in einer Höhe (H) verstellbare Ablage, beispielsweise einen Patiententisch, umfassend die folgenden Merkmale:
wenigstens eine Antriebswelle (25);
wenigstens eine Abtriebswelle (26);
wenigstens ein Zahnrad (28), das ausgebildet ist, um eine Rotationsbewegung der Antriebswelle (25) auf die Abtriebswelle (26) zu übertragen, wobei das Zahnrad (28) als Material einen Kunststoff umfasst,
ferner umfassend wenigstens ein zweites Zahnrad (30), das ausgebildet ist, um eine zweite Abtriebswelle (31) anzutreiben, wobei die zweite Abtriebswelle eine Hohlwelle ist.

2. Getriebe nach Anspruch 1, wobei das Zahnrad (28) gefräst ist.

3. Getriebe nach einem der vorhergehenden Ansprüche, wobei die Antriebswelle (25) als Material einen Stahl umfasst.

4. Getriebe nach einem der vorhergehenden Ansprüche, wobei das Zahnrad (28) ein Schneckenrad ist und die Antriebwelle (25) zumindest in dem Bereich, in dem es mit dem Schneckenrad in Eingriff steht, ebenfalls eine Schneckenverzahnung aufweist.

5. Getriebe nach einem der vorhergehenden Ansprüche, wobei das Zahnrad (28) austauschbar ist.

6. Getriebe nach einem der vorhergehenden Ansprüche, wobei die Abtriebswelle (26) eine Hohlwelle (29) ist, an deren Mantel das Zahnrad (28) befestigt ist.

7. Getriebe nach einem Anspruch 7, ferner umfassend eine Gewindestange (31) mit einem Außengewinde, die zumindest teilweise in der Hohlwelle (29) aufgenommen ist, und einem Adapterstück (131) mit einem Innengewinde, das ausgebildet ist, um mit dem Außengewinde der Gewindestange (130) in Eingriff zu stehen und/oder Laufbahnen auszubilden, wobei das Adapterstück (131) eine Adapterbefestigungsstruktur aufweist, die ausgebildet ist, um das Adapterstück (131) mit einer korrespondierenden Hohlwellenbefestigungsstruktur der Hohlwelle (29) drehfest zu verbinden.

8. Ablage, die in einer Höhe verstellbar ist, beispielsweise ein Patiententisch mit einem Getriebe (27) nach einem der Ansprüche 1 bis 8, umfassend eine Ablageplatte (17), wobei das Getriebe (27) ausgebildet ist, um eine Position der Ablageplatte (17) gegenüber einer Fläche, auf der die Ablage steht, zu verändern.

9. Verfahren (80) zum Verändern einer Höhe (H) einer Ablage, beispielsweise einem Patiententisch mit folgenden Merkmalen:
Übertragen (82) einer Rotationsbewegung von der Antriebswelle (25) auf ein Zahnrad (28) und ein zweites Zahnrad, das als Material einen Kunststoff aufweist;
Übertragen (84) der Rotationsbewegung von dem Zahnrad (28) auf eine Abtriebswelle (26) und eine zweite Abtriebswelle (31), die als Hohlwelle ausgebildet ist.
